# EUROPÄISCHE PATENTSCHRIFT

(11) **EP 0 727 258 B1**
(45) Veröffentlichungstag und Bekanntmachung des Hinweises auf die Patenterteilung: **13.10.1999**
(21) Anmeldenummer: 95113190.3
(22) Anmeldetag: 22.08.1995
(51) Int. Cl.: B05B 15/12

(54) **Reinigungseinrichtung für eine Pulverbeschichtungskabine**
Cleaning device for a powder coating booth
Dispositif de nettoyage d'un cabine de poudrage

(30) Priorität: 15.02.1995 DE 19505101; 19.06.1995 DE 19522186
(43) Veröffentlichungstag der Anmeldung: 21.08.1996
(73) Patentinhaber: WAGNER INTERNATIONAL AG, 9450 Altstätten (CH)
(72) Erfinder: Adams, Horst, Dr., D-88149 Nonnenhorn (DE); Hämmerle, Mario, A-6845 Hohenems (AT)
(74) Vertreter: Liesegang, Roland, Dr.-Ing.

(56) Entgegenhaltungen:
- DE-A- 3 024 130
- DE-C- 3 941 927

## Beschreibung

Die Erfindung betrifft eine Reinigungseinrichtung für eine Pulverbeschichtungskabine gemäß dem Oberbegriff des Patentanspruchs 1.

Eine bekannte Reinigungseinrichtung dieser Art (DE 35 16 826 C2) ist mit einem Rohrringsystem mit einem oben offenen Rohrring versehen, der mit seiner Basis auch den Kabinenboden überstreicht, um nicht nur das Kabinendach und die Kabinenseitenwände sondern auch den Kabinenboden mittels der Düsen mit stoßweise zugeführter Druckluft abzublasen. Hierdurch ist keine vollständige Reinigung und außerdem keine Beseitigung einer elektrostatischen Aufladung von aus Kunststoff bestehenden Kabinenwänden erreichbar.

Bei einer ähnlichen bekannten Reinigungseinrichtung (EP 0 200 681 B1), mit oben offenem Rohrring sind der Boden der Kabine und somit auch das Rohrringsystem V-förmig ausgebildet, wobei die Spitze des V in einen zentralen Absaugkanal zum Absaugen des abgeblasenen Pulvers mündet. Zusätzlich können zu der Reinigungsvorrichtung Schwämme gehören, um die Reinigungswirkung noch zu verbessern (DE-B-39 41 927). Aufgrund der V-förmigen Ausbildung des Kabinenbodens ist dieser nicht begehbar, was Inspektions- und Wartungsarbeiten erschwert.

Aus der DE-A-3 024 130 ist bekannt, den Kabinenboden als längs der Kabine bewegliches Transportband auszubilden.

Der Erfindung liegt die Aufgabe zugrunde, eine Reinigungseinrichtung der im Oberbegriff des Anspruchs 1 angegebenen Art so auszubilden, daß eine gute Reinigungswirkung und eine Begehbarkeit der Kabine sichergestellt sind.

Zur Lösung dieser Aufgabe dient Patentanspruch 1.

Im Gegensatz zu dem oben beschriebenen Stand der Technik ist das Rohrsystem nach der Erfindung nicht ringförmig, sondern weist zwei getrennte Rohrzweige auf, welche den Kabinenboden nicht überstreichen und somit auch nicht abblasen können. Der ebene, horizontal ausgerichtete Kabinenboden ist von einem Austragsband für überschüssiges Pulver überdeckt, das entweder am Ende der Kabine oder außerhalb davon gesondert gereinigt, zu. abgeblasen und/oder abgewischt wird. Das Austragsband ist begehbar, so daß Inspektions- und Wartungsarbeiten im Inneren der Kabine problemlos ausgeführt werden können.

Um die Reinigungswirkung noch zu verbessern und außerdem eventuelle elektrostatische Aufladungen der Kabinenwände zu beseitigen, sind die Merkmale der Ansprüche 2 und, vorzugsweise, 7 vorgesehen. Mittels der danach vorgesehenen Wischvorrichtung werden die nicht abgeblasenen Reste des am Kabinendach und an den Kabinenseitenwänden anhaftenden Pulvers naß (mit Wasser) abgewischt, vorzugsweise bei einer Rückkehrbewegung der Reinigungsvorrichtung, während bei der zeitlich früheren Hinbewegung das Abblasen mittels der Düsen der Rohrzweige stattfindet.

Das nasse Abwischen beseitigt jegliche elektrostatische Aufladung über das Wischwasser, insbesondere bei vorteilhaft aus Kunststoff bestehenden Kabinenwänden.

Weitere vorteilhafte Ausgestaltungen der Erfindung ergeben sich aus den übrigen Unteransprüchen.

Die Erfindung ist im folgenden anhand schematischer Zeichnungen an Ausführungsbeispielen mit weiteren Einzelheiten näher erläutert. Es zeigen:
- Fig. 1: eine perspektivische Darstellung einer Pulverbeschichtungskabine mit davor in Wartestellung befindlicher Reinigungsvorrichtung gemäß der Erfindung;
- Fig. 2: einen Querschnitt durch die Kabine mit darin befindlicher Reinigungsvorrichtung auf der Höhe des Rohrsystems;
- Fig. 3: einen Querschnitt durch eine Reinigungsvorrichtung gemäß Fig. 1 in einer Querebene auf der Höhe eines Wischrahmens und
- Fig. 4: in einem Halbschnitt in gleicher Schnittebene wie Fig. 2 ein abgewandeltes Rohrsystem der Reinigungseinrichtung nach der Erfindung.

In den Figuren ist eine Pulverbeschichtungskabine insgesamt mit der Bezugszahl 2 bezeichnet.

Mindestens die Innenwand 4 der Kabine besteht aus elektrisch nicht leitenden Kunststoff. Die Kabine ist mit einem Längsschlitz 6 im Dach versehen, längs dem auf Schienen 8 eine insgesamt mit der Bezugszahl 10 bezeichnete Transportvorrichtung mit elektromotorischem Antrieb 12 hin und her verfahrbar ist. Die Transportvorrichtung 10 hat zwei parallele, vertikale Wangen 14, die durch den Längsschlitz 6 in das Innere der Kabine 2 hineinragen.

An den Wangen 14 sind zwei L-förmige Rohrzweige 16,18 eines Rohrsystems befestigt. Die Rohrzweige 16,18 haben jeweils einen vertikalen langen Schenkel 161, 181 und einen horizontalen oberen kurzen Schenkel 162, 182. Mit den freien Enden der horizontalen Schenkel 162,182 sind die Rohrzweige 16,18 jeweils gegenüberliegend an den Wangen 14 so befestigt, daß die Rohrzweige in einer gemeinsamen Ebene angeordnet sind, die quer zur Längsrichtung der Kabine 2 liegt.

Die Rohrzweige 16,18 sind mit Düsen 163,164 bestückt, die im Bereich der vertikalen langen Schenkel horizontal gegen die Kabinenseitenwände 41,42 und im Bereich der kurzen Schenkel 162,182 gegen die Kabinendachwände 43,44 gerichtet sind.

An den unteren Enden der langen, vertikalen Schenkel 161,181 sind vertikal nach unten gerichtete Düsen 165,166 angeordnet, die oberhalb von Schrägflächen 45,46 an den unteren Enden der Kabinenseitenwände 41,42 angeordnet sind. Diese Schrägflächen münden in Schlitze 47,48 in beidseitig im Kabinenfußteil angeordneten Absaugkanälen 20,22.

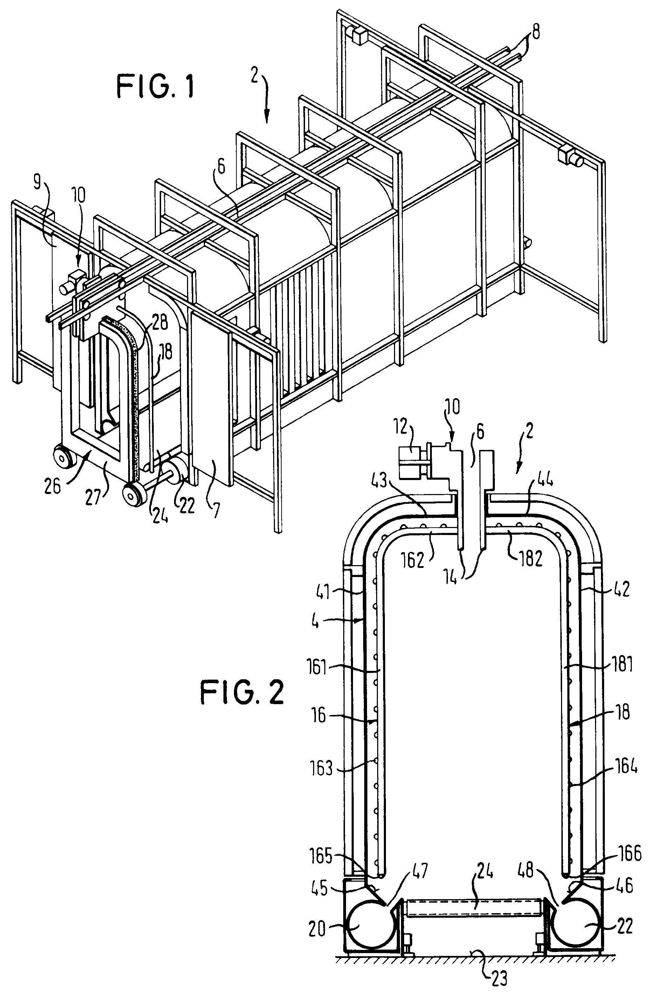

Der Kabinenboden 23 selbst ist von einem horizontalen endlosen Austragsband 24 bedeckt. Eine gesonderte Abreinigungsvorrichtung (nicht gezeigt) für dieses Austragsband, umfaßt eine Düsenanordnung am in Fig. 1 rechten Ende außerhalb der Kabine 2 und einen wegklappbaren Schwamm auf der Unterseite am in Fig. 1 linken Ende in demjenigen Bereich außerhalb der Kabine 2, wo der Rohrzweig 18 der Reinigungsvorrichtung dargestellt ist.

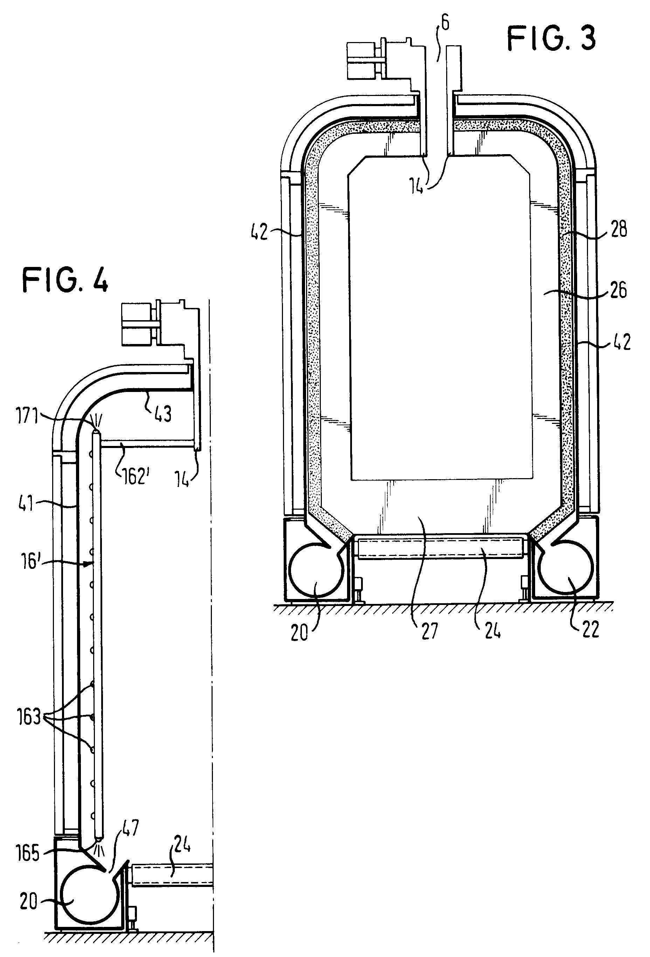

Zu der Reinigungsvorrichtung gehört außer dem Rohrsystem mit den Rohrzweigen 16,18 ein Wischrahmen 26 in Gestalt eines liegenden "C" (Fig. 1 und 3), der bei dem gezeigten Ausführungsbeispiel in einer vor der Ebene der Rohrzweige 16, 18 liegenden, dazu parallelen Ebene an den Wangen 14 befestigt ist. Am Umfang dieses Rahmens 26 ist eine Wischvorrichtung 28 in Form eines oder mehrerer ein- und ausfahrbarer Schwämme angeordnet (Fig. 1 und 3), die im Betrieb mit Wasser getränkt werden.

Die Druckluftversorgung der soweit beschriebenen Reinigungsvorrichtung kann bei dem gezeigten Ausführungsbeispiel über die Transportvorrichtung 10 mittels nicht gezeigten Luftschläuchen oder dgl. erfolgen, die von einer nicht gezeigten Druckluftquelle gespeist werden.

Bei einer alternativen Ausgestaltung, bei welcher die Rohrzweige 16,18 in den Rahmen 26 zur Halterung der ein- und ausfahrbaren Wischvorrichtung 28 integriert sind, kann die Druckluftversorgung der Zweige 16,18 auch im horizontalen unteren Steg 27 des Rahmens 26 untergebracht sein.

Im Betrieb werden längs der Schienen 8 Werkstücke, die mittels der durch den Schlitz 6 im Kabinendach greifenden Transportvorrichtung 10 durch die Kabine geschleust werden, mit nicht gezeigten Pulverbeschichtungseinrichtungen beschichtet.

Von Zeit zu Zeit, also nicht notwendigerweise nach jeder Pulverbeschichtung, wird die Reinigungsvorrichtung mitsamt den Rohrzweigen 16,18 und dem Wischrahmen 26 mittels der Transportvorrichtung 10 durch die Kabine hindurch transportiert. Dabei wird Druckluft durch die Düsen 163 bis 166 der Rohrzweige 16,18 geblasen, so daß die Kabinenseitenwände 41, 42 sowie die Kabinendachwände 43,44 abgeblasen werden. Dabei wird der größte Teil des an diesen Wänden anhaftenden Pulvers abgereinigt und entlang der Schrägflächen 45,46 durch die Schlitze 47,48 über die Absaugkanäle 20,22 abgesaugt und somit für eine Wiederverwendung rückgewonnen. Um die Reinigung zu vervollständigen, wird die Transportvorrichtung 10 nun in der Gegenrichtung durch die Kabine 2 zurückgefahren, wobei die Druckluftspeisung für die Düsen 163-166 abgestellt ist und stattdessen die Wischvorrichtung 28 zum Abwischen der Kabinenseitenwände 41,42 und der Kabinendachteile 43,44 aus dem Rahmen 26 ausgefahren ist und z.B. über die Wangen 14 mit Wischwasser versorgt wird, welches außer für ein wirkungsvolles Abwischen von Restpulver für eine Beseitigung von Aufladungen der Kabinenwände und des Austragsbandes sorgt.

Das Austragsband 24 wird wie oben beschrieben davon getrennt außerhalb der Kabine 2 abgereinigt, und zwar durch Abblasen auf der Werkstücksaustragsseite (rechts in Fig. 1) und durch Abwischen auf der Werkstückseinförderseite der Kabine 2.

Um eine Verunreinigung der Reinigungsvorrichtung durch vagabundierendes Pulver während des Pulverbeschichtens der Werkstücke zu vermeiden, ist die Reinigungsvorrichtung 16,18,26 während der Pulverbeschichtung der Werkstücke stets aus der Kabine ausgefahren, wobei sie in der "Parkstellung" gemäß Fig. 1 außerhalb der Kabine 2 geparkt sein kann. Während des Beschichtungsvorgangs sind die in Fig. 1 in Öffnungsstellung gezeichneten Kabinentüren 7,9 dann soweit geschlossen, daß über den verbleibenden Spalt noch ein kontinuierliches Durchfördern der zu beschichtenden Werkstücke möglich ist, sofern nicht ein diskontinuierlicher Betrieb gewünscht ist. Im letzten Falle können die Kabinentüren vollständig geschlossen sein.

Die Ausführung nach Fig. 4 zeichnet sich durch eine vereinfachte Ausgestaltung aus, bei welcher die Rohrzweige von gradlinigen, vertikalen Rohrstücken 16' gebildet sind, die von einer Rohrlänge abgeschnitten sind. Diese Rohrstücke sind mit den jeweils zugehörigen Wangen 14 über nicht mit Düsen versehene, horizontale Rohrstücke 162' verbunden, welche somit als Halter und Luftzuführmittel für die vertikalen Rohrstücke 16' dienen. An ihren oberen und unteren Enden können vertikale Düsen 171, 165 zum Abblasen einerseits des Deckenbereiches 43 und andererseits der Schrägfläche 45 der Seitenwand 41 dienen. Im übrigen ist diese Ausführung gegenüber derjenigen nach Fig. 2 unverändert und nicht weiter beschrieben.

Allen Ausführungen ist gemeinsam, daß der komplette Reingigungsvorgang einerseits ein Abblasen und andererseits ein Abwischen der Innenwände der Kabine 2 einschließlich der bewegten Bodenwand (Austragsband 24) umfaßt und somit zu einer wirkungsvollen Reinigung und gleichzeitigen Entladung der Kabinenwände führt.

Auch ist bei allen Ausführungen das Austragsband 24 ohne weiteres begehbar, was Inspektions- und Wartungsarbeiten in der Kabine erleichtert.

## Patentansprüche

1. Reinigungseinrichtung für eine Pulverbeschichtungskabine (2), die in Längsrichtung durch die Kabine verfahrbar ist und ein Rohrsystem mit Düsen (163-166) aufweist, über welche Reinigungsluft auf die Kabinenwände (4) geblasen wird, dadurch **gekennzeichnet**, daß das Rohrsystem im wesentlichen vertikal und parallel zu den Seitenwänden der Kabine (2) sich erstreckende, mit den Düsen (163-166) bestückte Rohrzweige (16,18) aufweist, die unten nicht miteinander kommunizieren, daß der Boden der Kabine von einem in Längsrichtung der Kabine laufenden Austragsband (24) gebildet ist, welches nicht von den Düsen der Rohrzweige beaufschlagt ist, und daß in den unteren beiden Eckbereichen der Kabine (2) beidseitig des Austragsbandes (24) Schlitze (47,48) vorgesehen sind, die mit seitlichen Absaugkanälen (20, 22) zur Rückgewinnung abgeblasenen Pulvers kommunizieren.

2. Reinigungseinrichtung nach Anspruch 1, dadurch **gekennzeichnet**, daß dem Rohrsystem ein Wischrahmen (26) zum Abwischen der Seitenwände (41,42) und der Decke (43) der Kabine (2) nachgeordnet ist.

3. Reinigungseinrichtung nach Anspruch 1 oder 2, dadurch **gekennzeichnet**, daß außerhalb der Kabine (2) eine gesonderte Abreinigungsvorrichtung zur Abreinigung des Anstragsbandes (17) vorgesehen ist.

4. Reinigungseinrichtung nach einem der Ansprüche 1 bis 3, dadurch **gekennzeichnet**, daß die in einer gemeinsamen vertikalen Ebene angeordneten Rohrzweige (16,18) umgekehrt L-förmig ausgebildet sind und mit oberen, horizontalen Schenkein (162,182) an zwei parallelen, vertikal durch einen Längsschlitz (6) in der Kabinendecke ragenden Wangen (14) einer Transportvorrichtung (10) aufgehängt sind und daß die Rohzweige (16,18) über eine gemeinsame, an der Transportvorrichtung (10) oder an dem Rahmen (26) angeordnete Druckluftspeisung mit Druckluft versorgt sind.

5. Reinigungseinrichtung nach Anspruch 4, dadurch **gekennzeichnet**, daß von den Seitenwänden (41,42) der Kabine (2) Schrägflächen (45,46) zu den Schlitzen (47,48) führen und daß vertikale Schenkel (161,181) der Rohrzweige (16,18) oberhalb der Schrägflächen angeordnet und mit auf die Schrägflächen (45,46) gerichteten Düsen (165,166) versehen sind.

6. Reinigungseinrichtung nach einem der Ansprüche 2 bis 5, dadurch **gekennzeichnet**, daß am Umfang des Wischrahmens (26) eine Wischvorrichtung (28) mit wassergespeisten Schwämmen angeordnet ist, die aus einer eingezogenen Ruhestellung in eine ausgefahrene Betriebsstellung ausschiebbar ist.

7. Reinigungseinrichtung nach Anspruch 6, dadurch **gekennzeichnet**, daß der Rahmen (26) in Form eines liegenden C ausgebildet ist, wobei die freien Enden seiner C-Schenkel an den Wangen (14) der Transportvorrichtung (10) angebracht sind.

8. Reinigungseinrichtung nach Anspruch 6 oder 7, dadurch **gekennzeichnet**, daß die Düsen (163-166) während des Transports durch die Kabine in der einen Richtung und die Wischvorrichtung (28) während des Transports in der anderen Richtung betätigbar sind.

9. Reinigungsvorrichtung nach Anspruch 3, dadurch **gekennzeichnet**, daß die Abreinigungsvorrichtung für das Anstragsband (24) eine Düsenanordnung zum Abblasen des Austragsbandes mit Druckluft auf der Auslaßseite der Kabine und einen wegklappbaren Schwamm an oder vor der Einlaßseite der Kabine aufweist.

## Claims

1. Cleaning device for a powder coating compartment (2), which is movable through said compartment in longitudinal direction and comprises a tube system with nozzles (163-166) via which cleaning air is blown against the compartment side walls (4), characterized in that the tube system has tube branches (16, 18) that extend essentially vertically and parallel to the sidewalls of said compartment (2) and are equipped with the nozzles (163-166) and do not communicate below, that the floor of said compartment is formed by a discharge belt (24) running in longitudinal direction of said compartment and not being blown by said nozzles, and that at both sides of said discharge belt (24) in the lower two corner regions of the compartment (2) slots (47, 48) are provided that communicate with lateral extraction channels (20, 22) for recovering the blown-off powder.

2. Cleaning device according to claim 1, characterized in that a wiper frame (26) is associated to said tube system for wiping off the sidewalls (41, 42) and the ceiling (43) of said compartment (2).

3. Cleaning device according to claim 1 or 2, characterized in that a separate cleaning mechanism for cleaning said discharge belt (24) is arranged outside said compartment (2).

4. Cleaning device according to one of claims 1 to 3, characterized in that the tube branches (16, 18) are arranged in a common vertical plane and are fashioned inverted L-shaped and have upper, horizontal legs (162; 182) suspended at two parallel plates (14) of a conveyor means (10), said plates extending through a longitudinal slot (6) in the compartment ceiling, and that the tube branches (16, 18) are supplied with compressed air via a common compressed air feed arranged at the conveyor means (10) or at the frame (26), respectively.

5. Cleaning device according to claim 4, characterized in that from the sidewalls (41, 42) of said compartment (2) slanting surfaces (45, 46) lead to the slots (47, 48) and that vertical legs (161; 181) of the tube branches (16, 18) are arranged above the slanting surfaces and are provided with nozzles (165, 166) directed onto the slanting surfaces.

6. Cleaning device according to one of claims 2 to 5, characterized in that at the circumference of the wiper frame (26) a wiper mechanism (28) having water-fed sponges that are extensible from a retracted rest position into an extended operating position is arranged.

7. Cleaning device according to claim 6, characterized in that the frame (26) is fashioned in the form a prone C, whereby the free ends of its C-legs are attached to said plates (14) of said conveyor means (10).

8. Cleaning device according to claim 6 or 7, characterized in that the nozzles (163-166) may be actuated during conveying through said compartment in one direction and the wiper mechanism (28) may be actuated during conveying in the respective other direction.

9. Cleaning device according to claim 3, characterized in that the cleaning mechanism for the discharge belt (24) comprises a nozzle arrangement for blowing the discharge belt off with compressed air at the discharge end of the compartment and comprises a hingeable sponge at or ahead of the inlet end of the compartment.

## Revendications

1. Dispositif de nettoyage d'une cabine de poudrage (2), qui est déplaçable à travers la cabine, dans la direction longitudinale, et qui comporte un système de tuyauteries avec des buses (163 à 166) par lesquelles l'air de nettoyage est soufflé sur les parois (4) de la cabine, caractérisé en ce que le système de tuyauteries comporte des ramifications de tubes (16, 18) équipées de buses (163 à 166) et s'étendant sensiblement verticalement ainsi que parallèlement aux parois latérales de la cabine (2) qui ne communiquent pas entre elles à la partie basse, en ce que le plancher de la cabine est formé par une bande d'extraction (24) s'étendant dans la direction longitudinale de la cabine, qui n'est pas concernée par les buses des ramifications de tubes et en ce que dans les deux zones d'angle inférieures de la cabine (2), des fentes (47,; 48), qui communiquent avec des canaux d'aspiration (20, 22) pour la récupération de la poudre soufflée, sont prévues des deux côtés de la bande d'extraction (24).

2. Dispositif de nettoyage selon la revendication 1, caractérisé en ce qu'un cadre d'essuyage (26) est monté en aval du système de tuyauteries pour essuyer les parois latérales (41, 42) et le plafond (43) de la cabine (2).

3. Dispositif de nettoyage selon la revendication 1 ou 2, caractérisé en ce qu'à l'extérieur de la cabine (2) est prévu un dispositif de nettoyage séparé en vue du nettoyage de la bande d'extraction (17).

4. Dispositif de nettoyage selon l'une des revendications 1 à 3, caractérisé en ce que les ramifications de tubes (16, 18), disposées dans un plan vertical commun, ont la forme d'un L inversé et sont suspendues, par des branches (162, 182) supérieures et horizontales, à deux joues (14) parallèles traversant verticalement une fente longitudinale (6) pratiquée dans le plafond de la cabine, d'un dispositif de transport (10), et en ce que les ramifications de tubes (16, 18) sont alimentées en air comprimé, par une alimentation en air comprimé commune, disposée sur le dispositif de transport (10) ou sur le cadre (26).

5. Dispositif de nettoyage selon la revendication 4, caractérisé en ce que depuis les parois latérales (41, 42) de la cabine, des surfaces obliques (45, 46) mènent aux fentes (47, 48) et en ce que des branches verticales (161, 181) des ramifications de tubes (16, 18) sont disposées au-dessus des surfaces obliques et sont pourvues de buses (165, 166), dirigées vers les surfaces obliques (45, 46).

6. Dispositif de nettoyage selon l'une des revendications 2 à 5, caractérisé en ce que'sur le pourtour du cadre d'essuyage (26) est disposé un dispositif d'essuyage (28) avec des éponges alimentées en eau, qui peuvent être extraites d'une position de repos rentrée dans une position de service sortie.

7. Dispositif de nettoyage selon la revendication 6, caractérisé en ce que le cadre (26) a la forme d'un C couché, les extrémités libres de ses branches de C étant placées sur les joues (14) du dispositif de transport (10).

8. Dispositif de nettoyage selon la revendication 6 ou 7, caractérisé en ce que les buses (163 à 166) sont actionnables dans un sens pendant le transport à travers la cabine, et le dispositif d'essuyage (28) est actionnable dans l'autre sens, pendant le transport.

9. Dispositif de nettoyage selon la revendication 3, caractérisé en ce que le dispositif de nettoyage de la bande d'extraction (24) comporte un ensemble de buses pour nettoyer la bande d'extraction par soufflage d'air comprimé sur le côté sortie de la cabine ainsi qu'une éponge pouvant être éloignée par rabattement sur ou devant le côté entrée de la cabine.
